Europäisches Patentamt

European Patent Office

Office européen des brevets

(11) Publication number: **0 101 953**
A1

## (12) EUROPEAN PATENT APPLICATION

(21) Application number: 83107466.1

(22) Date of filing: 28.07.83

(51) Int. Cl.³: **B 24 D 5/12**

(30) Priority: 29.07.82 US 403200

(43) Date of publication of application:
07.03.84 Bulletin 84/10

(84) Designated Contracting States:
AT CH DE FR GB IT LI LU NL SE

(71) Applicant: FEDERAL-MOGUL CORPORATION
26555 Northwestern Highway
Southfield Michigan 48075(US)

(72) Inventor: Ballenger, Paul
South Atlantic Street
Urbana Missouri 65767(US)

(74) Representative: Baillie, Iain Cameron et al,
c/o Ladas & Parry Isartorplatz 5
D-8000 München 2(DE)

(54) Abrasive cutting wheel.

(57) A rotatable cutting wheel (1) is disclosed having a plurality of abrasive arcuately shaped cutters (18) bonded to the periphery thereof and a gullet (16) between each pair of adjacent cutters, wherein preferably the arc length (L) of each cutter at its radial extremity is approximately equal to the arc length (B) of an adjacent gullet at its radial extremity, thereby providing the means with which to circulate fluid coolant to the cutting members at the point the cut is being made and to discharge the swarf from that same point to an area away from the cutting wheel.

Fig-1

EP 0 101 953 A1

- 1 -

The present invention relates to abrasive saw blades or cutting wheels and, most specifically to saw blades of the type formed by a strong, circular sheet metal drive core having one or more cutting members containing dispersed diamond dust secured around its periphery by a metallic bond and suitable for serious industrial applications.

Diamond abrasive saws of the metallic bonded variety have been classically divided into three distinct groups, all of which are well known in the trade at the present time. The first of these groups is the serrated or notched rim type blade, which is old in the art and is probably the earliest concept of the diamond cutting disc or saw. This type of blade is made by notching or slitting a disc of steel or copper and inserting into these fine hacks a paste of diamond grit and a holding material like petroleum jelly or, more recently, various metal powders. The notched rim type of saw has the merit of being reasonably indestructable, but it cuts so poorly that it has no real acceptance in any serious industrial applications, although it is satisfactory in the case of the lowest priced blades which are used in home hobby-type operations such as the lapidary avocation.

The second group of saw blades consists of a cutting disc having around its periphery a continuous annulus of compressed and matured metallic powder containing diamond dust. This blade has been traditionally made by cold molding the metal powder and diamond dust annulus

- 2 -

around a steel body and sintering or otherwise maturing the annulus to a sufficient strength to hold the diamond dust well and to cut freely. This type of blade is functionally superior over the first mentioned group of blades, but it too is unsatisfactory for serious industrial applications since it has the disadvantage of being physically frail due to the delicate nature of the bond between the annulus and the core. Various mechanical devices have been proposed to improve the bond, but in general due to the shortcomings of the manufacturing method, the cutting disc so made is fragile. Its use is confined in large part to precision operations such as germanium cutting, optical glass cutting, and other nice uses that fall more or less into the instrument making classes.

The third and relatively recent group of saw blades is the discontinuous rim or segmental type. This cutting disc is made by manufacturing a series of short arcuate segments containing diamond powder in a metallic body. These segments are usually about 2 inches long and are ordinarily silver soldered, brazed or welded to the rim of a steel core which has been divided into sections of approximately the segment length by chopping or sawing the rim radially. Without these discontinuities, the saw disc could not readily be made owing to the great stresses created in the disk by heating only its periphery. The segmented blade has been accepted by those fields that are prone to give the hardest usage to the blades, such as the concrete sawing and masonry cutting field where rough abrasive cutting is done.

For such applications it is common to flush the cutting area continuously during the cutting operation with a fluid coolant in order to keep the blade as cool as possible and to flush from such area loose rock-like material, spent abrasive and the like, all of which in combination with the coolant itself is generally referred to in the art and throughout this description of the present invention as "swarf". Even though the construction of this type of blade has been developed to a high point of perfection, blades must commonly be replaced whenever the swarf erodes the steel drive core at the juncture of the cutting members with the core and thus causes undercutting of the cutting members and possible loss of the cutting members. This is particularly the case in certain types of concrete cutting operations. Prior to this invention, little or no thought had been given to the idea of utilizing the blade construction itself to create a more effective means of providing greater cooling of the wheel and delivering coolant to the immediate area or point at which the wheel is making the cut as a means of flushing the swarf from that portion of the cut or cut groove which overlaps the sides of the wheel as the cut is being made.

The present invention is directed to a rotatable cutting wheel for cutting rock or rock-like material, said cutting wheel including a circular generally disc-shaped drive core having a plurality of circumferentially extending and circumferentially-spaced support surfaces, each of said support surfaces having cutter means affixed thereon, said core having a plurality of gullets, each of said gullets being defined by the space between each adjacent pair of said support surfaces and having an open end and a closed end, the circumferential width of said open gullet end being generally coextensive with the circumferential length of said space, the ratio of said circumferential length of each of said adjacent pair of said support surfaces to the circumferential length of said space being in the range of approximately 0.75 to 1.20, the total circumferential length of said support surfaces being approximately equal to the total circumferential width of said gullets at the open end thereof, and the radial depth of each of said gullets being approximately equal to the circumferential width of each said open gullet end, whereby each said gullet and its respective space between adjacent support surfaces cooperate to define a fluid passageway having a substantial volumetric capacity through which a fluid coolant can be circulated in substantial amounts to the cutting area, can cool the drive core in the area immediately adjacent the cutter means, and can carry away swarf therefrom.

The cutting wheel of the invention provides an effective means for circulating a fluid coolant since it effectively delivers a fluid coolant to the area being cut by the cutting wheel and to portions of the cutting wheel itself.

A diamond abrasive cutting wheel made in accordance with the invention uses substantially less diamond material than conventionally constructed cutting wheels but has a cutting speed at least equal to any such conventional cutting wheel.

Further features and advantages of the invention will be evident from the following description of a preferred embodiment of the invention taken together with the accompanying drawings wherein:

Fig. 1 is a fragmentary face view of a cutting wheel according to a preferred embodiment of the invention;

Fig. 2 is a fragmentary radial cross section of the cutting wheel of Fig. 1 taken approximately on the line 2-2 thereof through a gullet;

Fig. 3 is a fragmentary face view of a cutting wheel according to one example of the prior art;

Fig. 4 is a generally schematic perspective view of the cutting wheel of the invention as used in a conventional saw for cutting natural and artificial rock material.

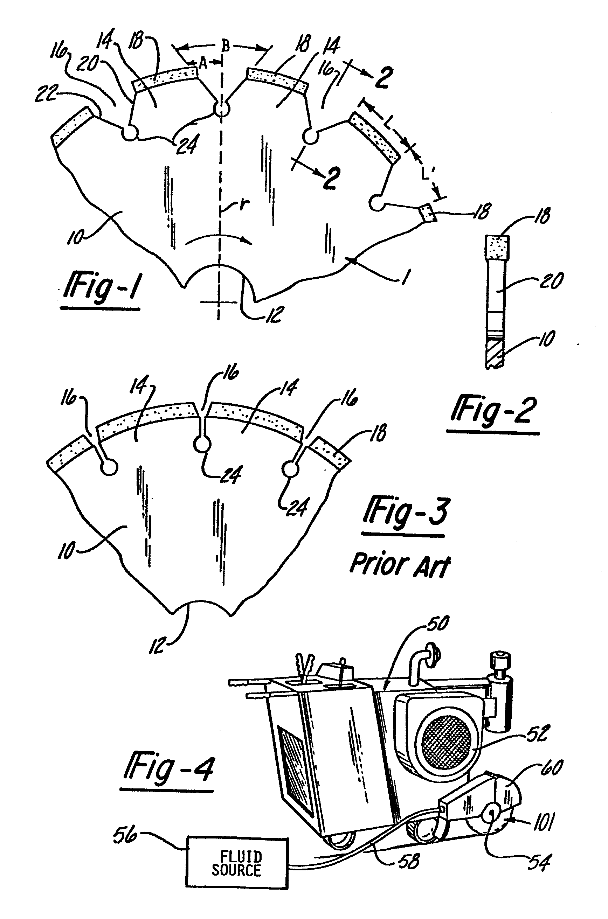

Fig. 1 illustrates a diamond abrasive cutting wheel or blade generally designated as 1, which is one example of a cutting wheel incorporating the present invention. The illustrated example of said cutting wheel generally includes a central sheet metal drive disc or core 10 made of suitable wrought metal, preferably steel, and provided with a central apparatus or arbor hole 12 for mounting the blade on a rotating axially-extending shaft. The periphery of the core is segmented so as to provide a plurality of cutting segments 14 and a gullet 16 between each adjacent pair of cutting segments 14. Upon a base or support surface located at the radially extremity of each cutting segment 14 there is bonded a diamond-bearing cutting element or member 18.

As viewed from the face of the saw blade in Fig. 1, the cutting elements are arcuate, and the bases of the cutting segments are circular arcs having the center of the core as their centers of curvature. The cutting members are composed of diamond grit embedded and dispersed in a hard matrix material such as a mixture of bronze and iron. The particular metal mixture mentioned is preferred at the present time, but it should be understood that the scope of the invention covers any suitable hard abrasive grit dispersed in any suitable hard mixture material. As seen in Fig. 2, the cutting members 18 are approximately rectangular in cross section (as viewed in a circumferential direction) and have a slightly greater width in an axial direction than the core 10 to extend axially outwardly beyond the surfaces of the core 10 by a small equal amount at either side. The diamond bearing elements or sections 18 are wider than the body of the core 10 to provide clearance during cutting, acting similar to the "set" on a wood or metal cutting saw blade.

Although not shown, the cutting members may overlap the peripheral edge of the core at the bottom edges of the grooves in a radially inward direction to a small extent. This overlapping contributes to the prevention of undercutting during the rotating operation of the saw blade. In the case of continued use of saw blades of the general type herein described, difficulties have been encountered with the drive core being worn out at the region of the arcuate junction of the diamond containing cutting members to the core. This wear is caused by the abrasive action of loose abrading particles on the rotating cutting wheel at this region which sharpens and thins the core at this critical peripheral area. The sharpening and cutting of the metallic periphery of the core may weaken the bonding junction.

The gullets 16 are bounded by respective side faces 20 and 22 of each adjacent pair of cutting segments 14. Each pair of side faces 20 and 22 forms a gullet that converges radially inwardly from the base of its respective cutting segment towards an apex. Preferably the gullet is symmetrical about a line r radiating from the center of the blade through the apex such that the angle A between one side face 22 and radial line r is equal to one half of the included angle B between each pair of side faces 20 and 22 forming a respective gullet. It is preferred that angle B be approximately $70^{\circ}$, however other angles could be used. For example, it has been found that the cutting wheel 1 will function satisfactorily at an angle B greater than $70^{\circ}$ provided one does not reach a point where the wheel "hammers" the materials being cut. "Hammering" is the action of a cutting wheel repetitively bouncing off the material surface rather than digging in and cutting it. A decrease in the angle B below the preferred angle of approximately $70^{\circ}$ will still obtain, but to a lesser degree, the results of the invention. However, it is also evident that a reduction of angle B to zero or thereabouts, as is typical of prior art wheels having gullets in the form of a narrow slot, will not achieve the desired circulation of fluid coolant in sufficient amounts to properly cool the drive core adjacent the cutter means nor will it facilitate the necessary removal of swarf from the cut. Therefore, at least when one's objective is to use as little diamond bearing material as possible, we prefer angle B equal to approximately 70°. If the blade is used in such a manner that one particular side face of each gullet is always the leading side face into the cutting area, then perhaps the angle of the opposing or trailing side face is of little importance. This is because in addition to the positive displacement type pumping action of the blade, it is believed that dynamic action is imparted to coolant by the leading side face of the blade gullet and as such it is the angle of this side face which will be most influential on the cooling and flushing action in the area of the cut. However, since blades of this general type are at times mounted on the arbor without regard to which side of the blade may be outboard of the drive means, we prefer that the gullet be symmetrical so that either side face will function effectively to produce the desired pumping action on the fluid coolant used to cool the blade and flush the swarf from the cutting area.

A drill hole 24 is made approximately at the centerpoint of the apex of each gullet 16 for purposes of relieving stresses which would otherwise be created at a sharp juncture of the side faces 20 and 22.

In addition to the geometric shape of the gullet, another important criteria to the effective performance of the present invention is that the total peripheral or circumferential length of diamond bearing material, i.e. the total circumferential length of all members 18, should be approximately equal to, or perhaps slightly greater than, the total gullet arc length or circumferential gullet width at the extremities of the wheel. Thus there is afforded a balance between the cutting ability of the diamond bearing members and the substantially large volumetric capacity of the gullets and thus their ability to circulate fluid to cool the blade and carry away the swarf. Preferably the cutting member arc length L of each cutting member is approximately equal to the arc length L' of each gullet. However, an acceptable approximate range for the ratio of cutting member arc length to gullet arc length is 0.75 to 1.20.

A specific example of a cutting wheel made in accordance with the invention has the following specifications:

Blade core diameter:  24 inches (61 cms.)

Blade core material:  Steel

Blade core thickness:  0.130 inches (3.3 mm.)

Number of cutting members:  19, equally spaced Cutting member arc length (L):  2.0 inches (5.1 cms.)

Number of gullets:  19

Gullet arc length (l):  Approx. 1.97 inches (5.0 cms.) (This exact dimension is determined by the other parameters given in this example) Gullet included angle B:  $70^{\circ}$

Gullet angle A:  $35^{\circ}$

Stress relieving drill hole radius:  5/16 inch (7.9 mm.)

The end result of the testing of a blade constructed as described above in accordance with the preferred embodiment is a blade wherein the gullet (i) provides a substantially large volumetric entrapment of a fluid coolant within the plane of the blade; (ii) pumps or circulates the fluid coolant into and from the cutting area; (iii) exposes a substantial amount of the core to the coolant; (iv) carries away the swarf from the cutting area each time it passes through the cut; and a blade that has other unexpected superior performance characteristics.

As shown in Fig. 3 wherein like references are used to refer to like features shown in Figs. 1 and 2, prior art blades include the usual diamond-bearing cutting members 16 mounted upon respective bases of cutting segments 14.  These blades are commonly slotted as at 16. However, the slots serve the primary purpose of providing a means for relieving thermal stresses caused during the manufacturing step of bonding each of the diamond-bearing cutting members to the core.  As such they have hereto-

- 9 -

fore not been constructed to provide the advantages obtained with the gullets of the present invention.

In use, as shown in Fig. 4, a cutting wheel 1 according to the present invention is mounted on the drive arbor shaft of a saw 50. The saw includes a motor generally shown at 52 for driving an arbor shaft 54 and thus the blade 1. It also includes means shown schematically at 56 for continuously providing a fluid coolant under constant pressure to the blade cutting area via a hose 58 leading to the blade shroud 60. The saw 50 by itself as shown and described is of standard construction and forms no part of the present invention. However, as a result of the unique structure of the cutting wheel 1 itself, upon supplying coolant to the cutting area during the process of cutting an abradable rock material, each gullet 16 in the cutting wheel 1 effectively renders a very effective, pumping or circulating action to the coolant in the cutting area in the manner as elsewhere described herein. This circulating action includes entrapping a substantial amount of the fluid coolant within each gullet 16 as each such gullet 16 enters the immediate area of the cut (i.e. the leading end of the groove being cut), and carrying the coolant from the surface of the material to that area. Thereafter each gullet 16 as it passes from the leading end of the groove being cut entraps a substantial amount of the swarf and carries it away from this area. On at least certain applications, it is believed the coolant and/or swarf may be caused to flow radially inwardly into a respective gullet, thus keeping the cut or groove clean of abraded material and providing a greater cooling effect to the core of the diamond-bearing cutting members.

It is to be understood that the aforedescribed preferred embodiment is not limiting but is merely illustrative of the invention, and various modifications thereof may be made by one skilled in the art without departing from the scope of the invention.

- 10 -

CLAIMS

1. A rotatable cutting wheel (1) for cutting rock or rock-like material, said cutting wheel including a circular generally disc-shaped drive core (10) having a plurality of circumferentially extending and circumferentially-spaced support surfaces (14), each of said support surfaces (14) having cutter means (18) affixed thereon, said core (10) having a plurality of gullets (16), each of said gullets (16) being defined by the space between each adjacent pair of said support surfaces (14), and having an open end and a closed end, the circumferential width of said open gullet end being generally coextensive with the circumferential length of said space, characterized in that the ratio of said circumferential length of each said adjacent pair of said support surfaces (14) to the circumferential length of said space being in the range of approximately 0.75 to 1.20, the total circumferential length of said support surfaces (14) being approximately equal to the total circumferential width of said gullets (16) at the open end thereof, and the radial depth of each of said gullets (16) being approximately equal to the circumferential width of each said open gullet end, whereby each said gullet (16) and its respective space between adjacent support surfaces (14) cooperate to define a fluid passageway having a substantial volumetric capacity through which a fluid coolant can be circulated in substantial amounts to the cutting area, can cool the drive core (10) in the area immediately adjacent the cutter means (18), and can carry away swarf therefrom.

2. A rotatable cutting wheel according to claim 1, characterized in that each of said support surfaces (14) is approximately two inches in circumferential length.

3. A rotatable cutting wheel according to claim 1 or 2, characterized in that the circumferential width of each said gullet (16) decreases substantially from

- 11 -

said open gullet to said closed gullet end.

4. A rotatable cutting wheel according to claim 1, 2 or 3, characterized in that said cutter means (18) includes diamond particles held by and dispersed throughout a matrix material.

5. A rotatable cutting wheel according to any of claims 1 to 4, characterized in that said cutter means includes a plurality of separate cutting segments (18), one of said cutting segments (18) being bonded, respectively, to each of said support surfaces (14).

6. A rotatable cutting wheel according to claim 5, characterized in that each said cutting segment (18) is approximately two inches (5.1 cms.) in circumferential length and the axial width thereof is slightly greater than said drive core (10) at said support surfaces (14), each said cutting segment (18) being axially centered on a respective said support surface (14) so as to extend axially outwardly beyond the surfaces of said drive core (10) by a substantially equal amount at either side thereof.

7. A rotatable cutting wheel according to claim 5 or 6, characterized in that each said gullet (16) begins at an apex radially inwardly of the periphery of said drive core (10) and is bounded by a pair of side faces (20, 22) diverging radially outwardly from said apex at an included angle greater than zero degrees and less than approximately $90^{\circ}$, each said side face (20, 22) being the lateral extremity of a respective said cutting segment (18) and terminating at a respective said support surface (14).

8. A rotatable cutting wheel according to claim 7, characterized in that said pair of side faces (20, 22) of each said gullet (16) diverge radially outwardly for at least a major portion thereof at an included angle of approximately $70^{\circ}$.

9. A rotatable cutting wheel according to claim 7 or 8, characterized in that each said gullet (16) is symmetrical to a line radiating from the center of said core (10) through said apex.

10. A rotatable cutting wheel according to
claim 7, 8 or 9, characterized by relief means (24) at
each said apex for relieving tensile stress at the apex
of each said gullet (16), said relief means comprising
a drill hole (24) having a centerpoint substantially at
the apex of each said gullet (16).

11. A rotatable cutting wheel according to any
of the preceding claims, characterized in that the closed
end of each said gullet (16) is located a substantial
radial distance inwardly of said support surface (14),
said radial distance being determined as extending from
the radially outermost extremity of said open end to a
point defined as the intersection of two lines, each of
said two lines diverging radially inwardly from a respective support surface (14) at an equal angle relative to
a line extending radially outwardly from the center of
said core (10) through the circumferential center of said
gullet (16), said two lines intersecting at an included
angle of approximately 70°.

12. A machine for cutting natural and artificial rock material including a rotatable cutting wheel
(1), means (52) for rotating said cutting wheel (1) about
an axis (54) and means (56) for supplying a liquid coolant
to said cutting wheel (1) for purposes of cooling the
cutting wheel (1) and carrying away loose rock material
from the cutting edges thereof, said cutting wheel (1)
including at least one circular generally disc-shaped
drive core (10), said drive core (10) having a plurality
of circumferentially extending and circumferentially
spaced support surfaces (14), each of said support surfaces (14) having cutter means (18) affixed thereon, said
core (10) having a plurality of gullets (16) each of
said gullet (16) being defined by the space between each
adjacent pair of said support surfaces (14) and having
an open end and a closed end, the circumferential width
of said open gullet end being generally coextensive with
the circumferential length of said space, characterized

- 13 -

in that the ratio of said circumferential length of each said adjacent pair of said support surfaces (14) to the circumferential length of said space being in the range of approximately 0.75 to 1.20, the total circumferential length of said support surfaces (14) being approximately equal to the total circumferential width of said gullets (16) at the open end thereof, and the radial depth of each of said gullets (16) being approximately equal to the circumferential width of each said open gullet end, whereby each said gullet (16) and its respective space between adjacent support surfaces (14) cooperate to define a fluid passageway having a substantial volumetric capacity through which a fluid coolant can be circulated in substantial amounts to the cutting area, can cool the drive core (10) in the area immediately adjacent the cutter means (18), and can carry away swarf therefrom.

13. A machine according to claim 12, characterized in that said abrasive cutter means (18) includes diamond particles held by and dispersed throughout a matrix material.

14. A machine according to claim 13 or 14, characterized in that said cutter means (18) comprises a plurality of separate cutting segments (18), one of said cutting segments (18) being bonded, respectively, to each of said support surfaces (14).

15. A machine according to claim 14, characterized in that each said cutting segment (18) is approximately two inches (5.1 cms.) in circumferential length, and the axial width thereof is slightly greater than said drive core (10) at said support surfaces (14), each said cutting segment (18) being axially centered on a respective said support surface (14) so as to extend axially outwardly beyond the surfaces of said drive core (10) by a substantially equal amount at either side thereof.

0101953

1/1

Fig-1

Fig-2

Fig-3
Prior Art

Fig-4

FLUID SOURCE

# EUROPEAN SEARCH REPORT

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | DE-C- 471 578 (MARS-WERKE) * Figure 3 * | 1,3,5 7,8 | B 24 D 5/12 |
| X,Y | EP-A-0 039 024 (BÜDIAM DIAMANTWERKZEUGE W.U.R. BÜTTNER GMBH) * Figure 1 * | 1,4,5 | |
| X,Y | DE-U-7 709 410 (C. HURTH MASCHINEN- UND ZAHNRADFABRIK) * Page 3, paragraph 2 * | 1,3,5 7,8 | |
| X,Y | FR-A-2 248 685 (NORTON CO.) * Figure 1 * | 1,4,5 | |
| X,Y | Soviet Inventions Illustrated Week B20, 20 June 1979 Section P64 & SU-A-613909 | 1,3,5 7,8 | TECHNICAL FIELDS SEARCHED (Int. Cl. ³) |
| X | US-A-2 394 326 (NEWNHAM) * Figures 3, 5 * | 1 | B 23 D 61/18 B 24 D 5/00 B 28 D 1/00 E 21 C 25/16 |
| X,A | US-A-2 990 828 (HOERER) * Figure 7 * | 1,10 | |
| X | US-A-3 517 967 (CLARKE et al.) * Figure 5 * | 1 | |
| X | US-A-4 067 311 (BENETELLO) * Figure 1 * | 1 | |
| | --- -/- | | |

The present search report has been drawn up for all claims

| Place of search BERLIN | Date of completion of the search 25-10-1983 | Examiner ZAPP E |
|---|---|---|

**European Patent Office**

**EUROPEAN SEARCH REPORT**

| DOCUMENTS CONSIDERED TO BE RELEVANT | | | Page 2 | |
|---|---|---|---|---|
| Category | Citation of document with indication, where appropriate, of relevant passages | Relevant to claim | CLASSIFICATION OF THE APPLICATION (Int. Cl. ³) | |
| X | TECHNISCHE RUNDSCHAU, vol. 64, nol 35, 25 August 1972 H. HAURI "Trennen von Hartstoffen", pages 46, 47, 49 * Page 47, figure 2, legend * ----- | 1 | | |
| | | | TECHNICAL FIELDS SEARCHED (Int. Cl. ³) | |

The present search report has been drawn up for all claims

| Place of search | Date of completion of the search | Examiner |
|---|---|---|
| BERLIN | 25-10-1983 | ZAPP E |